# EUROPÄISCHE PATENTANMELDUNG

(11) **EP 3 059 115 A1**
(43) Veröffentlichungstag der Anmeldung: **24.08.2016**
(21) Anmeldenummer: 16156579.1
(22) Anmeldetag: 19.02.2016
(51) Int. Cl.: B60L 11/18

(54) **BATTERIEANORDNUNG FÜR EIN FAHRZEUG**

(30) Priorität: 20.02.2015 DE 102015102410
(71) Anmelder: Vossloh Kiepe GmbH, 40599 Düsseldorf (DE)
(72) Erfinder: Seidl, Udo, 47877 Willich (DE); Japuncic, Daniel, 40627 Düsseldorf (DE); Melles, Niklas Felix, 42103 Wuppertal (DE)
(74) Vertreter: Feder Walter Ebert

(57) **Zusammenfassung**

Die Erfindung betrifft ein Traktionsbatteriemodul (1) zur Energieversorgung eines Traktionsumrichters (9) für einen elektrischen Antriebsmotor (10) eines Fahrzeugs mit mindestens einem Batteriemodul (2), mit einem an das Batteriemodul (2) angeschlossenen Batteriemodul-Umrichter (3) zur Bereitstellung einer Versorgungsspannung des Traktionsumrichters (9). Die Erfindung betrifft ferner einen elektrischen Antriebsstrang (11) für ein Fahrzeug sowie wie ein Verfahren zur Energieversorgung eines Traktionsumrichters (9) für einen elektrischen Antriebsmotor (10) eines Fahrzeugs mittels eines Traktionsbatteriemoduls (1), welches mindestens ein Batteriemodul (2) aufweist, wobei an das Batteriemodul (2) ein Batteriemodul-Umrichter (3) zur Bereitstellung einer Versorgungsspannung des Traktionsumrichters (9) angeschlossen wird.

## Beschreibung

Die Erfindung betrifft ein Traktionsbatteriemodul zur Energieversorgung eines Traktionsumrichters für einen elektrischen Antriebsmotor eines Fahrzeugs mit mindestens einem Batteriemodul. Die Erfindung betrifft ferner einen elektrischen Antriebsstrang für ein Fahrzeug sowie ein Verfahren zur Energieversorgung eines Traktionsumrichters für einen elektrischen Antriebsmotor eines Fahrzeugs mittels eines Traktionsbatteriemoduls, welches mindestens ein Batteriemodul aufweist.

Traktionsbatteriemodule finden vor allem in der Antriebstechnik von Bussen und Bahnen Anwendung. So ist es beispielsweise bekannt Traktionsbatteriemodule bei Batteriebussen, bei Hybridbussen, bei Trolleybussen oder bei Bahnen im Nahverkehr vorzusehen. Bei den verschiedenen Anwendungen kann das Traktionsbatteriemodul für einen reinen Batteriebetrieb oder auch für einen Unterstützungsbetrieb verwendet werden. Ein Unterstützungsbetrieb ist beispielsweise dann erforderlich, wenn Oberleitungen fehlen oder wenn aus der Oberleitung nicht genügend Energie entnommen werden kann, beispielsweise an Haltestellen im Fahrzeugstillstand.

Das Traktionsbatteriemodul bildet dabei einen Teil eines elektrischen Antriebsstrangs, bestehend aus Batteriemodul, Traktionsumrichter und elektrischem Antriebsmotor. Die Batteriemodule stellen dabei Energiespeicher dar, beispielsweise in Form von Akkumulatoren, und dienen als Spannungsquelle für den Traktionsumrichter. Der Traktionsumrichter wiederum ist in der Regel mit einem oder mehreren elektrischen Antriebsmotoren verbunden und versorgt diese entsprechend mit Energie. Der elektrische Antriebsstrang bildet dabei eine Einheit, welche auch zusätzlich zu anderen Antrieben, wie etwa Hybridantrieben, Anwendung finden kann.

Aufgrund der Vielzahl von verschiedenen Anwendungsbereichen werden unterschiedliche Antriebe mit unterschiedlichem Energiebedarf benötigt. Daher können auch bekannte Traktionsbatteriemodule in verschiedensten Bauformen ausgebildet sein. Da die Stückzahlen jedoch nicht besonders hoch sind und die Anforderungen an ein solches Modul zumeist nicht gleich sind, werden die Traktionsbatteriemodule meist auf Kundenwunsch entwickelt und gefertigt. Das Traktionsbatteriemodul wird daher je nach Bedarf neu zusammengesetzt und weist somit stets neue Anforderungen an den Traktionsumrichter auf, weshalb dieser gleichfalls neu auf das Traktionsbatteriemodul und den Antriebsmotor abzustimmen ist.

Zwar haben sich solche elektrischen Antriebsstränge in der Vergangenheit bewährt. Allerdings hat sich als nachteilig erwiesen, dass neben der Batteriemodulkonfiguration auch der Traktionsumrichter aufgrund der Vielfältigkeit der Anwendungen sowie der verschiedenen Kombinationsmöglichkeiten der Traktionsbatteriemodule jedes Mal für das entsprechende Batteriemodul und den Antriebsmotor zu entwickeln und herzustellen ist, wodurch hoher Aufwand und hohe Kosten entstehen.

Die vorliegende Erfindung stellt sich daher die **Aufgabe**, die Einsatzmöglichkeiten eines Traktionsbatteriemoduls für unterschiedliche Traktionsumrichter zu erhalten.

Die Aufgabe wird bei einem Traktionsbatteriemodul der eingangs genannten Art über einen an das Batteriemodul angeschlossenen Batteriemodul-Umrichter zur Bereitstellung einer Versorgungsspannung des Traktionsumrichters gelöst.

Durch einen an das Batteriemodul angeschlossenen Batteriemodul-Umrichter kann über einen weiten Bereich eine beliebige Spannung für den Traktionsumrichter zur Verfügung gestellt werden. Über den Batteriemodul-Umrichter kann die Batteriespannung des Batteriemoduls entsprechend der benötigten Versorgungsspannung aufbereitet und eingestellt werden. So kann je nach Traktionsumrichter eine beliebige Versorgungsspannung bereitgestellt werden, unabhängig von der aktuellen Batteriespannung des Batteriemoduls. Es entsteht eine Art intelligente Batterie in Form einer Black-Box, an welche der Traktionsumrichter angeschlossen werden kann.

Eine vorteilhafte Ausgestaltung sieht vor, dass das Batteriemodul eine oder mehrere in Reihe und/oder parallel geschaltete Batteriezellen aufweist. Die Batteriezellen können je nach Energiebedarf derart miteinander verschaltet werden, dass eine definierte Batteriespannung des Batteriemoduls zur Verfügung gestellt werden kann. Auf diese Weise kann durch die Wahl der Anzahl und der Verschaltung der Batteriezellen die Ausgangsspannung des Batteriemoduls eingestellt werden. Das Batteriemodul kann dabei als Energiespeicher, insbesondere als Akkumulator ausgebildet sein. Bevorzugt ist dabei ein Batteriemodul, welches mindestens zwölf Batteriezellen aufweist, wobei zwei Reihenschaltungen aus jeweils sechs Batteriezellen parallel miteinander verschaltet sind. Alternative Anordnungen jeglicher Form sind jedoch auch denkbar.

In diesem Zusammenhang ist es von Vorteil, wenn mehrere Batteriemodule zu einem eine Strangspannung erzeugenden Batteriestrang in Reihe geschaltet sind. Durch die Verschaltung mehrerer Batteriemodule zu einem Batteriestrang kann die Strangspannung auf einen definierten Wert entsprechend den Anforderungen an das Traktionsbatteriemodul eingestellt werden. Zusätzlich zu der Spannungseinstellung über die Anzahl der Batteriemodule können je nach Energiebedarf auch mehrere Batteriestränge parallel miteinander verschaltet werden, wodurch sich die zur Verfügung stehende Energiemenge vergrößert. Analog können auch bei geringerem Energiebedarf Batteriestränge abgetrennt werden.

Eine weitere vorteilhafte Ausgestaltung sieht mehrere Batteriemodul-Umrichter vor, die jeweils einem Batteriestrang zugeordnet sind. Auf diese Weise kann erreicht werden, dass unabhängig von der Anzahl der in Reihe geschalteten Batteriemodule der Batteriemodul-Umrichter in vorgegebenen Spannungsgrenzen eine definierte Strangspannung erzeugen kann. Wird jedem Batteriestrang ein Batteriemodul-Umrichter zugeordnet, ist es lediglich erforderlich, den einen Batteriemodul-Umrichter auf den Batteriestrang abzustimmen, wodurch der bei der Fertigung entstehende Aufwand weiter verringert werden kann.

Eine weitere Ausgestaltung der Erfindung sieht vor, dass an den Batteriemodul-Umrichter eine geregelte oder ungeregelte Spannungsquelle zum Laden des Batteriemoduls anschließbar ist. Auf diese Weise kann die verbrauchte Energie eines zumindest teilentladenen Batteriemoduls entweder während des Fahrbetriebs aber auch während des Stillstands wieder aufgefüllt werden. Das Batteriemodul kann hierzu als wiederaufladbares Batteriemodul, insbesondere als Akkumulator, ausgebildet sein.

Das Laden des Batteriemoduls kann über verschiedene Spannungsquellen erfolgen. Eine mögliche Spannungsquelle kann beispielsweise eine Oberleitung darstellen. Die benötigte Energie kann der Oberleitung entnommen und zum Laden des Batteriemoduls dem Batteriemodul-Umrichter zugeführt werden. Ein Laden kann ferner über die durch Rekuperation zurückgewonnene Bremsenergie erfolgen. Der Antrieb kann hierzu als Generator betrieben werden, so dass durch die mechanische Leistungsaufnahme der Bremseffekt erreicht wird. Die Rückspeisung der Energie kann dann über den Batteriemodul-Umrichter in das Batteriemodul erfolgen. Ebenfalls denkbar ist, dass das Batteriemodul über eine externe Spannungsquelle, wie beispielsweise einen Generator, einen weiteren Antrieb, eine Batterie oder dergleichen geladen wird. Hierzu können an dem Batteriemodul-Umrichter entsprechende Anschlüsse vorgesehen sein.

Zum Laden des Batteriemoduls kann eine ungeregelte Gleichspannung in einem weiten Spannungsbereich oder eine geregelte Spannung, wie etwa eine gleichgerichtete, dreiphasige Spannung verwendet werden. Bevorzugt liegt die Ladespannung im Bereich zwischen 200 V und 1000 V, besonders bevorzugt im Bereich zwischen 400 V und 900 V. Es ist ferner vorteilhaft, wenn der Antrieb und/oder der Traktionsumrichter und/oder der Batteriemodul-Umrichter bidirektional ausgebildet sind, so dass sowohl ein Entladebetrieb als auch ein Ladebetrieb möglich ist.

Besonders bevorzugt ist eine Ausgestaltung, bei der an den Batteriemodul-Umrichter ein Traktionsumrichter für einen elektrischen Antriebsmotor des Fahrzeugs anschließbar ist. Der Batteriemodul-Umrichter kann in gewissen vorgegebenen Spannungsgrenzen eine vordefinierte Versorgungsspannung zur Verfügung stellen, wodurch es nicht erforderlich ist, den Traktionsumrichter für jedes zu projektierende Traktionsbatteriemodul neu anzupassen. Der Batteriemodul-Umrichter kann entsprechend den Anforderungen auf den Traktionsumrichter elektrisch abgestimmt sein. Der Batteriemodul-Umrichter kann dabei in einem derart großen Bereich arbeiten, dass eine Vielzahl an Traktionsumrichtern anschließbar sind.

In diesem Zusammenhang ist es von Vorteil, wenn von dem Traktionsumrichter gelieferte Bremsenergie zum Laden des Batteriemoduls dem Batteriemodul-Umrichter zuführbar ist. Die beim Bremsen oder im Schubbetrieb freiwerdende Energie des Traktionsumrichters kann mittels Rekuperation in elektrische Energie umgewandelt werden. Diese kann dem Batteriemodul-Umrichter zugeführt und von diesem zum Laden des Batteriemoduls verwendet werden.

Eine konstruktive Ausgestaltung sieht eine Trägervorrichtung zum gemeinsamen Tragen von Batteriemodul und Batteriemodul-Umrichter vor. Das Batteriemodul und der Batteriemodul-Umrichter können so nicht nur zu einer funktionellen Einheit sondern auch räumlich oder baulich zu einer Einheit zusammengefasst werden. Die Trägervorrichtung kann dabei bevorzugt als ein Gehäuse oder als ein Rahmen ausgebildet sein. Durch die räumliche Zusammenfassung des Batteriemoduls und des Batteriemodul-Umrichters kann ein in sich abgeschlossenes System nach Art einer Black-Box realisiert werden, bei welcher sowohl Spannungen als auch Ströme einstellbar sein können. Das Batteriemodul und der Batteriemodul-Umrichter bilden dann eine geschlossene Einheit, wobei von außen nicht sichtbar ist, welche Komponenten Verwendung finden. Zusätzlich kann die Gefahr der Beschädigung beispielsweise durch äußere Einflüsse verringert werden.

In Fahrzeugen, wie Bussen und Bahnen existieren verschiedene Bezugspotentiale, weshalb bei der Integration eines Traktionsbatteriemoduls zu überlegen ist, auf welches Potential dieses gelegt werden soll. Als Potentiale können hier beispielsweise das Oberleitungspotential, das Karosseriepotential oder auch ein Zwischenpotential zur Verfügung stehen. Bevorzugt wird das Traktionsbatteriemodul auf Oberleitungspotential gelegt. Das erfordert eine elektrische Isolierung des Traktionsbatteriemoduls vom Karosseriepotential und bei Trolleybussen sogar eine doppelte Isolierung.

Sind das Batteriemodul und der Batteriemodul-Umrichter einander zugeordnet, beispielsweise über eine gemeinsame Trägervorrichtung, so bilden diese nicht nur funktionell und räumlich eine Einheit sondern auch im Hinblick auf die Isolierung. Mit einer gemeinsamen Trägervorrichtung kann die gleiche Isolierung gegenüber den weiteren Antriebskomponenten verwendet werden. Auch kann auf eine Isolierung zwischen dem Batteriemodul und dem Batteriemodul-Umrichter verzichtet werden. Besonders bevorzugt ist die Trägervorrichtung daher räumlich und elektrisch isoliert ausgebildet. Das Batteriemodul und der Batteriemodul-Umrichter können dann beispielsweise auf Oberleitungspotential liegen, wohingegen die Trägervorrichtung auf Zwischenpotential liegen kann. Diese kann dann wiederum räumlich und elektrisch isoliert und gegen Berührung geschützt in der Karosserie montiert werden.

In diesem Zusammenhang ist es von Vorteil, wenn die baulichen Abmessungen des Batteriemodul-Umrichters den baulichen Abmessungen eines oder mehrerer Batteriemodule entsprechen. Dadurch, dass die Abmessungen bevorzugt gleich sind, kann auf unkomplizierte Art und Weise eine einfache Konstruktion realisiert werden. Auch können das Batteriemodul und der Batteriemodul-Umrichter ohne großen Aufwand auf einer gemeinsamen Trägervorrichtung angeordnet werden. Die mechanische Integration eines Traktionsbatteriemoduls in ein Fahrzeug kann dadurch weiter vereinfacht werden.

Um die von dem Batteriemodul zur Verfügung gestellte Batteriespannung in die vom Traktionsumrichter benötigte Versorgungsspannung wandeln zu können, ist es erforderlich, dass der Batteriemodul-Umrichter eine Wandlerschaltung und insbesondere eine Umrichterschaltung aufweist.

Gemäß einer vorteilhaften Ausgestaltung weist der Batteriemodul-Umrichter daher eine Umrichterschaltung mit einem Hochsetzsteller und einem Tiefsetzsteller auf. Bevorzugt kann der Batteriemodul-Umrichter für beide Richtungen des Energieflusses, also für das Laden und das Entladen des Batteriemoduls, jeweils eine Reihenschaltung aus einem Hochsetzsteller und einem Tiefsetzsteller darstellen. Der Batteriemodul-Umrichter kann dann unabhängig vom Energiefluss als Umrichter arbeiten und die vom Batteriemodul erzeugte Batteriespannung in die erforderliche Versorgungsspannung des Traktionsumrichters wandeln. Über den Batteriemodul-Umrichter können so in beiden Richtungen des Energieflusses Spannungen und Ströme in weiten Bereichen eingestellt werden.

In diesem Zusammenhang ist es von Vorteil, wenn der Batteriemodul-Umrichter mehrere Umrichterschaltungen aufweist. Durch die mehrfache Verwendung derselben Umrichterschaltung kann der Batteriemodul-Umrichter mehrfach versetzt taktend ausgeführt werden. So können Vorteile bei der Dimensionierung des Traktionsbatteriemoduls und auch Vorteile bezüglich der Welligkeiten von Spannung und Strom erzielt werden.

Bevorzugt ist es ferner, wenn der Hochsetzsteller und/oder der Tiefsetzsteller der Umrichterschaltung über einen Schalter, insbesondere über einen Transistor, geschaltet werden. Durch das Ein- und Ausschalten des Schalters kann die Höhe der Ausgangsspannung des Batteriemodul-Umrichters, also die Versorgungsspannung des Traktionsumrichters eingestellt werden. Bevorzugt ist der Schalter als ein Halbleiterschalter ausgebildet, besonders bevorzugt als ein Insulated Gate Bipolar Transistor (IGBT) mit antiparalleler Diode. Alternativ können jedoch auch Halbleiterbauelemente in Silizium-Karbid-Technik verwendet werden, wie beispielsweise SiC-MOSFETs, wodurch eine besonders kompakte Bauform und hohe Taktfrequenzen erreicht werden können.

Da die Entladeleistung eines Traktionsbatteriemoduls größer sein kann als die Ladeleistung, ist es von Vorteil, wenn der Batteriemodul-Umrichter einen Schalter aufweist, mit welchem die Umrichterschaltung überbrückbar ist. Der Schalter kann dabei entweder als mechanischer Schalter oder aber auch als Halbleiterschalter ausgebildet sein. Die Komponenten des Batteriemodul-Umrichters können dann kleiner dimensioniert werden, da nur das Laden und der Unterstützungsbetrieb über den Batteriemodul-Umrichter erfolgen, während für eine reine Batteriefahrt der Umrichter überbrückt werden kann. Alternativ zu einem solchen Schalter kann bei reiner Batteriefahrt auch auf nicht taktenden Betrieb umgeschaltet werden. Hierdurch entstehen jedoch im Vergleich zum überbrückenden Schalter zusätzliche Verluste.

Nachdem nun auf das Traktionsbatteriemodul an sich genauer eingegangen wurde, soll nachfolgend ein erfindungsgemäßer elektrischer Antriebsstrang näher betrachtet werden.

Bei einem elektrischen Antriebsstrang der eingangs genannten Art wird die Aufgabe durch ein Traktionsbatteriemodul der vorstehend beschriebenen Art und einem an das Traktionsbatteriemodul angeschlossenen Traktionsumrichter gelöst. Hierbei ergeben sich dieselben Vorteile, welche bereits im Zusammenhang mit dem Traktionsbatteriemodul beschrieben wurden.

Gemäß einer bevorzugten Ausgestaltung ist durch den Traktionsumrichter die Antriebsspannung eines elektrischen Antriebsmotors des Fahrzeugs einstellbar. Da der Traktionsumrichter eingangsseitig mit einer definierten Spannung versorgt werden kann, muss der Traktionsumrichter lediglich auf den Antriebsmotor abgestimmt werden. Eine Abstimmung auf das Traktionsbatteriemodul ist nicht erforderlich. Das Batteriemodul und der Batteriemodul-Umrichter stellen insoweit eine Art Black-Box dar, an welche der Traktionsumrichter angeschlossen werden kann. Über den Traktionsumrichter kann dann der Antriebsstrom bzw. die Antriebsspannung je nach Bedarf eingestellt werden.

Um einen sicheren Betrieb des Fahrzeugs und insbesondere des Antriebsstrangs gewährleisten zu können, ist es erforderlich sämtliche Antriebskomponenten zu temperieren, so dass temperaturbedingte Ausfälle verringert werden können.

Eine weitere bevorzugte Ausgestaltung des Antriebsstrangs sieht daher ein Kühlmodul zur gemeinsamen Kühlung von Batteriemodul und Batteriemodul-Umrichter vor. Durch ein gemeinsames Kühlmodul für das Batteriemodul und den Batteriemodul-Umrichter kann eine einfache Konstruktion verwendet werden. Besonders vorteilhaft ist das Kühlmodul dabei als Flüssigkeitskühlung ausgebildet, wodurch eine besonders kompakte Bauform erreicht werden kann. Bei einer solchen Flüssigkeitskühlung kann das gleiche Kühlmedium für das Batteriemodul als auch für den Batteriemodul-Umrichter verwendet werden. Das Kühlmodul kann neben der Kühlung auch für einen Heizvorgang zur Verfügung stehen. So ist es möglich, das Batteriemodul und den Batteriemodul-Umrichter stets auf Betriebstemperatur zu halten, wodurch sich Verluste verringern lassen.

Vorteilhafterweise werden das Batteriemodul und der Batteriemodul-Umrichter durch einen gemeinsamen von dem Kühlmodul betriebenen Kühlkreislauf gekühlt. Das Batteriemodul kann im Kühlkreislauf bevorzugt vor dem Batteriemodul-Umrichter angeordnet sein, so dass erst das Batteriemodul und dann der Batteriemodul-Umrichter gekühlt wird. Dies ist von Vorteil, da es häufig erforderlich sein kann, das Batteriemodul stärker zu kühlen als den Batteriemodul-Umrichter. Die für die Kühlung erforderlichen Komponenten, wie beispielsweise Pumpe, Lüfter etc. können konstruktiv dem Traktionsbatteriemodul zugeordnet sein. Alternativ ist es aber auch denkbar, die Kühlkomponenten außerhalb des Traktionsbatteriemoduls anzuordnen, was die mechanische Isolierung vereinfachen kann.

Eine alternative Ausgestaltung sieht vor, dass das Batteriemodul und der Batteriemodul-Umrichter durch separate von dem Kühlmodul betriebene Kühlkreisläufe gekühlt werden. So kann auf einfache Art und Weise eine auf die jeweiligen Komponenten ausgelegte Kühlung, entsprechend den jeweiligen Anforderungen des Batteriemoduls und des Batteriemodul-Umrichters, erfolgen. Der Kühlkreislauf des Batteriemodul-Umrichters kann dabei als eine Art Bypass zum Kühlkreislauf des Batteriemoduls verlaufen.

Bei einem Verfahren der eingangs genannten Art wird die Aufgabe dadurch gelöst, dass an das Batteriemodul ein Batteriemodul-Umrichter zur Bereitstellung einer Versorgungsspannung des Traktionsumrichters angeschlossen wird. Auch hier ergeben sich die gleichen Vorteile wie dies bereits zum Traktionsmodul und zum elektrischen Antriebsstrang erläutert wurde.

Die im Zusammenhang mit dem Traktionsbatteriemodul und dem elektrischen Antriebsstrang beschriebenen Merkmale können vorteilhaft allein oder in Kombination auch bei dem Verfahren Anwendung finden.

Weitere Einzelheiten und Vorteile der Erfindung sollen nachfolgend anhand der in den Zeichnungen dargestellten Ausführungsbeispiele erläutert werden. Hierin zeigen:
- Fig. 1: eine schematische Darstellung eines erfindungsgemäßen elektrischen Antriebsstrangs,
- Fig. 2: eine erste Ausführung einer Umrichterschaltung,
- Fig. 3: eine zweite Ausführung einer Umrichterschaltung.

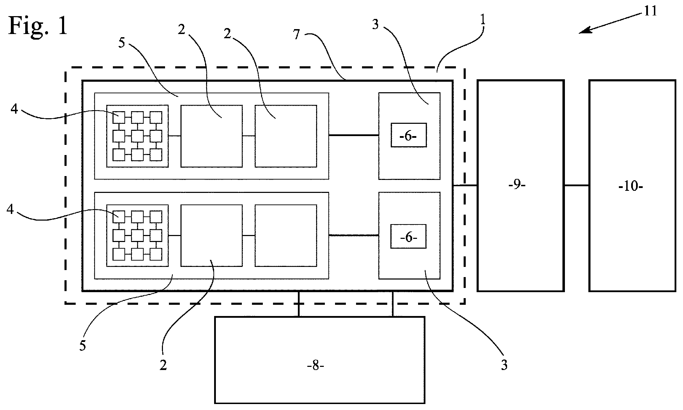

In der Fig. 1 ist schematisch ein elektrischer Antriebsstrang 11, bestehend aus dem Traktionsbatteriemodul 1, dem Traktionsumrichter 9 sowie dem Antriebsmotor 10, dargestellt. Solche elektrischen Antriebsstränge 11 finden Anwendung insbesondere bei der Antriebstechnik von Bussen und Bahnen, wie etwa Trolleybussen, Hybridbussen oder Bahnen im Nahverkehr.

Das Traktionsbatteriemodul 1 stellt dabei ausgangsseitig eine Versorgungsspannung für den Traktionsumrichter 9 zur Verfügung, welcher wiederum den elektrischen Antriebsmotor 10 eines Fahrzeugs mit Energie versorgt.

Aufgrund der vielen unterschiedlichen Anforderungen hat es sich in der Vergangenheit gezeigt, dass die Herstellung elektrischer Antriebsstränge 11 häufig mit Schwierigkeiten und hohem Arbeitsaufwand verbunden ist, da der Traktionsumrichter 9 sowohl auf den Antriebsmotor 10 als auch auf das Traktionsbatteriemodul 1 abzustimmen ist. Es war daher erforderlich, den Traktionsumrichter 9 für jedes neu zu projektierende Traktionsbatteriemodul 1 elektrisch auf sämtliche Komponenten abzustimmen und entsprechend auszulegen. Um dies nun zu vereinfachen und eine über einen weiten Bereich beliebige Energieversorgung des Traktionsumrichters 9 bereitstellen zu können, wurde das Traktionsbatteriemodul 1 um einen Batteriemodul-Umrichter 3 ergänzt. Das Traktionsbatteriemodul 1 wird insoweit durch ein oder mehrere Batteriemodule 2 sowie den Batteriemodul-Umrichter 3 gebildet.

Das Batteriemodul 2 besteht im Ausführungsbeispiel aus zwei parallel miteinander verschalteten Batteriesträngen 5, welche ein oder mehrere Batteriemodule 2 enthalten können. Je nach Energiebedarf können die Batteriestränge 5 parallel miteinander verschaltet werden. Wird beispielsweise eine hohe Leistung benötigt, können eine Vielzahl an Batteriesträngen 5 miteinander parallel verschaltet werden, wodurch die Leistung erhöht wird. Alternativ können bei einem geringen Energiebedarf auch Batteriestränge 5 abgetrennt werden, weshalb dann beispielsweise bereits ein Batteriestrang 5 ausreichend sein kann.

Der Batteriestrang 5 besteht aus einem oder mehreren Batteriemodulen 2, welche in Reihe verschaltet sind. Die Batteriespannung des Batteriestrangs 5 ergibt sich dann aus der entsprechenden Anzahl der Batteriemodule 2. Durch das Hinzufügen oder Wegnehmen von Batteriemodulen 2 und/oder Batteriesträngen 5 kann die Batteriespannung und damit die Versorgungsspannung des Traktionsumrichters 9 in weiten Bereichen beliebig eingestellt werden. Die Batteriemodule 2 sind als wiederaufladbare Batterien ausgebildet.

Die Batteriemodule 2 setzen sich wiederum aus einzelnen Batteriezellen 4 zusammen, welche ebenfalls in Reihe und/oder parallel verschaltet werden können. Hier hat es sich gezeigt, dass beispielsweise Konfigurationen von mindestens zwölf Batteriezellen 4 von Vorteil sind. Die Batteriezellen 4 weisen dabei einen festen Spannungswert auf, wobei sich die Spannung eines Batteriemoduls 2 dann aus der entsprechenden Anzahl von Batteriezellen 4 ergibt.

Das Traktionsbatteriemodul 1 ist als Energiespeicher, beispielsweise als Akkumulator ausgebildet. Das Batteriemodul 2 kann dabei je nach Bedarf beund entladen werden. So wird das Batteriemodul 2, beispielsweise durch den Betrieb des Traktionsumrichters 9 sowie des elektrischen Antriebsmotors 10, entladen. Beim Bremsen kann Energie aus dem Antriebsmotor 10 über den Traktionsumrichter 9 direkt dem Traktionsbatteriemodul 1 zugeführt werden und zum Laden des Batteriemoduls 2 dienen. Darüber hinaus können zum Laden externe Ladevorrichtungen vorgesehen sein, welche über bekannte mechanische und elektrische Schnittstellen, wie Steckvorrichtungen, mit dem Batteriemodul 2 verbunden werden können. Für die externe Ladung wird lediglich eine ungeregelte Gleichspannung in einem weiten Spannungsbereich benötigt. Alternativ ist auch die Einspeisung einer geregelten Spannung möglich, wie etwa die Einspeisung einer gleichgerichteten dreiphasigen 400 V-Spannung.

Wie dies ebenfalls der Fig. 1 zu entnehmen ist, kann jedem Batteriestrang 5 ein eigener Batteriemodul-Umrichter 3 zugeordnet sein. Der Batteriemodul-Umrichter 3 kann dabei an die jeweilige Batteriemodulkonfiguration des Batteriestrangs 5 angepasst werden, so dass mittels des Batteriemodul-Umrichters 3 eine Ausgangsspannung in vorgegebenen Spannungsbereichen erzeugt werden kann. Die elektrischen Leistungsdaten sind dabei an jedes Batteriemodul 2 gekoppelt und immer gleich.

Durch den an das Batteriemodul 2 angeschlossenen Batteriemodul-Umrichter 3 wird eine weitestgehend konstante Versorgungsspannung für den Traktionsumrichter 9 bereitgestellt, wobei die Versorgungsspannung mittels des Batteriemodul-Umrichters 3 auf einen festen Wert eingestellt werden kann. Der Batteriemodul-Umrichter 3 bereitet dabei die Batteriespannung des Batteriemoduls 2 auf. Es entsteht eine Art intelligente Batterie, welche von außen wie eine Black-Box wahrgenommen werden kann. Die verwendeten Komponenten bzw. die dadurch erzeugten Batteriespannungen sind für einen Betrachter von außen nicht zu erkennen. Daher kann über einen weiten Bereich eine beliebige Versorgungsspannung bereitgestellt werden, unabhängig von der aktuellen Batteriespannung. Es ist lediglich darauf zu achten, dass die Versorgungsspannung den Vorgaben des Traktionsumrichters 9 entspricht. Beim Laden des Traktionsbatteriemoduls 1 können in einem ebenfalls weiten Spannungsbereich Ladestrom und Ladespannung optimal eingestellt werden.

Das Batteriemodul 2 kann über den Batteriemodul-Umrichter 3 an den Traktionsumrichter 9 für einen elektrischen Antriebsmotor 10 des Fahrzeugs angeschlossen werden. Das Batteriemodul 2 und der Batteriemodul-Umrichter 3 sind dabei elektrisch aufeinander abgestimmt.

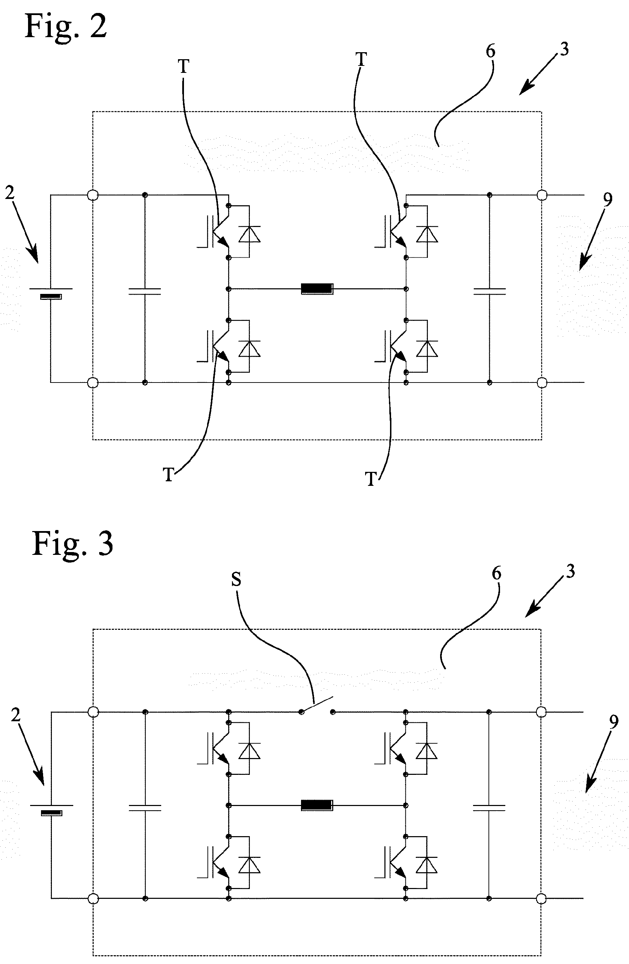

Eine erfindungsgemäße Umrichterschaltung 6 des Batteriemodul-Umrichters 3 ist in der Fig. 2 dargestellt. Der Batteriemodul-Umrichter 3 weist eine Umrichterschaltung 6 auf, welche eingangsseitig mit der Batteriespannung des Batteriemoduls 2 versorgt wird und ausgangsseitig eine Versorgungsspannung für den Traktionsumrichter 9 zur Verfügung stellt. Die Umrichterschaltung 6 stellt im vorliegenden Fall eine Reihenschaltung aus einem Hochsetzsteller und einem Tiefsetzsteller dar, wobei ein Energiefluss sowohl vom Traktionsumrichter 9 hin zum Batteriemodul 2 möglich ist als auch vom Batteriemodul 2 hin zum Traktionsumrichter 9. In beide Richtungen sind ein Hochsetzsteller und ein Tiefsetzsteller in Reihe geschaltet. Hierdurch wird ermöglicht, dass Spannungen und Ströme in weiten Bereichen einstellbar sind.

Der Batteriemodul-Umrichter 3 kann dabei mehrere Umrichterschaltungen 6 aufweisen, welche mehrfach versetzt taktend arbeiten können. Hierfür genügt die mehrfache Verwendung der gleichen Schaltungsanordnung.

Der Hochsetzsteller und/oder der Tiefsetzsteller werden dabei über Schalter T, insbesondere über einen Transistor, geschaltet. Die Höhe der Ausgangsspannung kann dabei durch ein geregeltes Ein- und Ausschalten des Schalters T eingestellt werden. Im Ausführungsbeispiel handelt es sich bei den Schaltern T um Halbleiterschalter und insbesondere um IGBT-Schalter mit antiparalleler Diode. Alternativ können die Schalter T auch auf einer Silizium-Karbid-Technik beruhen, beispielsweise als SiC-MosFET, wodurch dann eine kompaktere Bauform mit hohen Taktfrequenzen erreicht werden kann.

Die Funktionen Hochsetzen und Tiefsetzen sowohl für den Lade- als auch für den Entladebetrieb eröffnen neue Freiheitsgrade bei der Auslegung des Traktionsumrichters und der Ladeeinrichtung.

Wie dies der Fig. 3 zu entnehmen ist, kann die Umrichterschaltung 6 auch mittels eines Schalters S überbrückt werden. Hierbei kann der Schalter S entweder als mechanischer Schalter oder auch als Halbleiterschalter ausgebildet sein. Der Batteriemodul-Umrichter 3 bzw. die Umrichterschaltung 6 können dann, beispielsweise bei reiner Batteriefahrt, überbrückt werden, da die Entladeleistung größer ist als die Ladeleistung. Die Komponenten können durch die Überbrückungsmöglichkeit kleiner dimensioniert werden, wenn nur das Laden und der Unterstützungsbetrieb über den Batteriemodul-Umrichter 3 erfolgen müssen. Alternativ kann bei reiner Batteriefahrt auch einfach auf einen nicht taktenden Betrieb umgeschaltet werden, was jedoch zu höheren Verlusten führt.

Um die Integration eines solchen Traktionsbatteriemoduls 1 in ein Fahrzeug zu erleichtern, können das Batteriemodul 2 und der Batteriemodul-Umrichter 3 auf einer Trägervorrichtung 7 angeordnet sein. Diese Trägervorrichtung 7 kann beispielsweise ein Gehäuse oder ein Rahmen sein, wodurch erreicht werden kann, dass das Batteriemodul 2 und der Batteriemodul-Umrichter 3 eine Einheit bilden. Es ergibt sich sowohl in funktioneller als auch in räumlicher Hinsicht eine geschlossene Einheit in Form einer Black-Box. Es entsteht eine "intelligente Batterie" mit einem Plus- und einem Minuspol, wobei im Gegensatz zu einem Traktionsbatteriemodul 1 ohne Batteriemodul-Umrichter 3 sowohl Spannungen als auch Ströme einstellbar sind. Die baulichen Abmessungen des Batteriemodul-Umrichters 3 entsprechen dabei den baulichen Abmessungen eines oder mehrerer Batteriemodule 2, wodurch es vereinfacht wird, für unterschiedliche Anwendungen spezifische intelligente Batterien zu konstruieren. Ein Traktionsbatteriemodul 1 könnte auf Grund der Multifunktionalität zudem auch Nebenverbraucher im Fahrzeug mit Energie versorgen, z.B. Klimageräte, Heizgeräte oder Beleuchtungsgeräte.

Je nachdem, ob das Traktionsbatteriemodul 1 für Anwendungen bei reinen Batteriefahrten oder auch für Anwendungen, welche mit Unterstützungsbetrieb arbeiten, verwendet wird, bedarf es unterschiedlichen Anforderungen an die elektrische Regelung. So kann der Batteriemodul-Umrichter 3 im Unterstützungsbetrieb auch als Stromquelle betrieben werden. Beispielsweise bei Trolleybussen, welche normalerweise an Oberleitungen fahren, kann es notwendig sein, für oberleitungsfreie Strecken oder beispielsweise auch an Haltestellen, einen Unterstützungsbetrieb über Traktionsbatteriemodule 1 sicherzustellen. Dann wird zusätzlich zu der aus der Oberleitung zur Verfügung gestellten Energie die zusätzlich benötigte Energie über den elektrischen Antriebsstrang 11 mit dem Traktionsbatteriemodul 1, dem Traktionsumrichter 9 und dem elektrischen Antriebsmotor 10 bereitgestellt.

Bei der Integration des Traktionsbatteriemoduls 1 ist in einem solchen Fall zu überlegen, auf welches Potential das Traktionsbatteriemodul 1 gelegt werden soll. Hierzu existieren in der Regel drei oder mehr Potentiale, wie dem Oberleitungspotential, einem Zwischenpotential und dem Karosseriepotential.

Im vorliegenden Fall liegt das Traktionsbatteriemodul 1 auf Oberleitungspotential, wobei die Trägervorrichtung 7 in Form eines Gehäuses auf Zwischenpotential gelegt wird. Das Gehäuse 7 kann dann wiederum durch eine entsprechende mechanische Isolierung in die Karosserie eingebracht werden und somit auf Karosseriepotential liegen.

Damit es nicht zu einer Überhitzung des Batteriemoduls 2 bzw. des Batteriemodul-Umrichters 3 kommt, ist des Weiteren ein Kühlmodul 8 zur gemeinsamen Kühlung vorgesehen. Es entsteht eine besonders einfache Konstruktion, wenn die Kühlung des Batteriemoduls 2 dasselbe Medium wie für die Kühlung des Batteriemodul-Umrichters 3 verwendet. Im Ausführungsbeispiel ist das Kühlmodul 8 als Flüssigkeitskühlung ausgebildet, wodurch eine besonders kompakte Bauform ermöglicht wird. Alternativ kann das Kühlmodul 8 auch derart ausgestaltet sein, dass neben einer Kühlung auch ein Aufheizen der einzelnen Elemente möglich ist. So kann erreicht werden, dass sowohl das Batteriemodul 2 als auch der Batteriemodul-Umrichter 3 stets auf einer optimalen Betriebstemperatur gehalten werden können. Der Wirkungsgrad des Batteriemodul-Umrichters 3 wird durch das Kühlmodul 8 erhöht. Das Batteriemodul 2 und der Batteriemodul-Umrichter 3 werden dabei von einem gemeinsamen von dem Kühlmodul 8 betriebenen Kühlkreislauf gekühlt.

Das Batteriemodul 2 ist dabei kühltechnisch gesehen vor dem Batteriemodul-Umrichter 3 angeordnet, da die Kühlung des Batteriemoduls 2 Vorrang genießt. Das Batteriemodul 2 ist thermisch sensibler als der Batteriemodul-Umrichter 3, weshalb der Hauptanteil der Kühlung auf das Batteriemodul 2 entfällt. Für den Batteriemodul-Umrichter 3 ist es ausreichend, wenn ein leicht vorgewärmtes Kühlmedium zur Verfügung steht. Die für die Kühlung erforderlichen Komponenten, wie beispielsweise die Pumpe, ein Kühler, ein Lüfter oder dergleichen, sind dabei konstruktiv dem Traktionsbatteriemodul 1 zugeordnet, wodurch sich Vorteile bei der Isolierung ergeben.

Alternativ können diese Kühl-Komponenten auch außerhalb des Traktionsbatteriemoduls 1 angeordnet werden, wodurch dann jedoch die mechanische Isolierung verkompliziert wird. Es ist jedoch von Vorteil, wenn der Batteriemodul-Umrichter 3, das Batteriemodul 2 und das Kühlmodul 8 sowohl mechanisch, elektrisch als auch wärmetechnisch miteinander gekoppelt sind. Das Kühlmodul 8 kann beispielsweise in dem gleichen Gehäuse bzw. auf der gemeinsamen Trägervorrichtung 7 wie das Batteriemodul 2 und der Batteriemodul-Umrichter 3 angeordnet sein.

Der Kühlkreislauf des Batteriemodul-Umrichters 3 kann alternativ auch als eine Art Bypass ausgelegt sein, sodass eine separate Kühlung des Batteriemoduls 2 und des Batteriemodul-Umrichters 3 über getrennt betriebene Kühlkreisläufe des Kühlmoduls 8 erreicht wird. Die Auslegung der Kühlung und dort insbesondere die Durchflussmenge kann dann entsprechend den Anforderungen an das Batteriemodul 2 als auch an den Batteriemodul-Umrichter 3 erfolgen.

Durch ein erfindungsgemäßes Traktionsbatteriemodul 1, bestehend aus einem oder mehreren Batteriemodulen 2 und einem Batteriemodul-Umrichter 3, kann eine Versorgungsspannung an dem Traktionsumrichter 9 bereitgestellt werden, welche über weite Bereiche einstellbar ist. Es ist daher nicht mehr erforderlich, den Traktionsumrichter 9 auf das Traktionsbatteriemodul 1 abzustimmen. Der Batteriemodul-Umrichter 3 stellt im Wesentlichen das Bindeglied zwischen Batteriemodul 2 und Traktionsumrichter 9 dar.

### Bezugszeichen:

- 1: Traktionsbatteriemodul
- 2: Batteriemodul
- 3: Batteriemodul-Umrichter
- 4: Batteriezelle
- 5: Batteriestrang
- 6: Umrichterschaltung
- 7: Trägervorrichtung
- 8: Kühlmodul
- 9: Traktionsumrichter
- 10: Antriebsmotor
- 11: Elektrischer Antriebsstrang

- S: Schalter
- T: Schalter

## Patentansprüche

1. Traktionsbatteriemodul zur Energieversorgung eines Traktionsumrichters (9) für einen elektrischen Antriebsmotor (10) eines Fahrzeugs mit mindestens einem Batteriemodul (2),
**gekennzeichnet durch**
einen an das Batteriemodul (2) angeschlossenen Batteriemodul-Umrichter (3) zur Bereitstellung einer Versorgungsspannung des Traktionsumrichters (9).

2. Traktionsbatteriemodul nach Anspruch 1, **dadurch gekennzeichnet, dass** das Batteriemodul (2) eine oder mehrere in Reihe und/oder parallel geschaltete Batteriezellen (4) aufweist.

3. Traktionsbatteriemodul nach Anspruch 1 oder 2, **dadurch gekennzeichnet, dass** mehrere Batteriemodule (2) zu einem eine Strangspannung erzeugenden Batteriestrang (5) in Reihe geschaltet sind.

4. Traktionsbatteriemodul nach einem der vorhergehenden Ansprüche, **dadurch gekennzeichnet, dass** an den Batteriemodul-Umrichter (3) eine geregelte oder ungeregelte Spannungsquelle zum Laden des Batteriemoduls (2) anschließbar ist.

5. Traktionsbatteriemodul nach einem der vorhergehenden Ansprüche, **dadurch gekennzeichnet, dass** an den Batteriemodul-Umrichter (3) ein Traktionsumrichter (9) für einen elektrischen Antriebsmotor (10) des Fahrzeugs anschließbar ist.

6. Traktionsbatteriemodul nach Anspruch 5, **dadurch gekennzeichnet, dass** von dem Traktionsumrichter (9) gelieferte Bremsenergie zum Laden des Batteriemoduls (2) dem Batteriemodul-Umrichter (3) zuführbar ist.

7. Traktionsbatteriemodul nach einem der vorhergehenden Ansprüche, **dadurch gekennzeichnet, dass** der Batteriemodul-Umrichter (3) eine Umrichterschaltung (6) mit einem Hochsetzsteller und einem Tiefsetzsteller aufweist.

8. Traktionsbatteriemodul nach Anspruch 7, **dadurch gekennzeichnet, dass** der Batteriemodul-Umrichter (3) mehrere Umrichterschaltungen (6) aufweist.

9. Traktionsbatteriemodul nach einem der Ansprüche 7 bis 8, **dadurch gekennzeichnet, dass** der Batteriemodul-Umrichter (3) einen Schalter (S) aufweist, mit welchem die Umrichterschaltung (6) überbrückbar ist.

10. Elektrischer Antriebsstrang für ein Fahrzeug, **gekennzeichnet durch** ein Traktionsbatteriemodul (1) nach einem der vorhergehenden Ansprüche und einem an das Traktionsbatteriemodul (1) angeschlossenen Traktionsumrichter (9).

11. Elektrischer Antriebsstrang nach Anspruch 10, **dadurch gekennzeichnet, dass** durch den Traktionsumrichter (9) die Antriebsspannung eines elektrischen Antriebsmotors (10) des Fahrzeugs einstellbar ist.

12. Elektrischer Antriebsstrang nach einem der Ansprüche 10 oder 11, **gekennzeichnet durch** ein Kühlmodul (8) zur gemeinsamen Kühlung von Batteriemodul (2) und Batteriemodul-Umrichter (3).

13. Elektrischer Antriebsstrang nach Anspruch 12, **dadurch gekennzeichnet, dass** Batteriemodul (2) und der Batteriemodul-Umrichter (3) durch einen gemeinsamen, von dem Kühlmodul (8) betriebenen Kühlkreislauf gekühlt werden.

14. Elektrischer Antriebsstrang nach Anspruch 12, **dadurch gekennzeichnet, dass** das Batteriemodul (2) und der Batteriemodul-Umrichter (3) durch separate, von dem Kühlmodul (8) betriebene Kühlkreisläufe gekühlt werden.

15. Verfahren zur Energieversorgung eines Traktionsumrichters (9) für einen elektrischen Antriebsmotor (10) eines Fahrzeugs mittels eines Traktionsbatteriemoduls (1), welches mindestens ein Batteriemodul (2) aufweist,
**dadurch gekennzeichnet,**
**dass** an das Batteriemodul (2) ein Batteriemodul-Umrichter (3) zur Bereitstellung einer Versorgungsspannung des Traktionsumrichters (9) angeschlossen wird.
